# EUROPÄISCHE PATENTSCHRIFT

(11) **EP 2 760 780 B1**
(45) Veröffentlichungstag und Bekanntmachung des Hinweises auf die Patenterteilung: **03.02.2016**
(21) Anmeldenummer: 13713184.3
(22) Anmeldetag: 28.03.2013
(51) Int. Cl.: B66C 17/00

(54) **KRAN, INSBESONDERE BRÜCKENKRAN ODER PORTALKRAN, MIT MINDESTENS EINEM KRANTRÄGER**
CRANE, IN PARTICULAR AN OVERHEAD CRANE OR GANTRY CRANE, HAVING AT LEAST ONE CRANE GIRDER
GRUE, EN PARTICULIER PONT ROULANT OU GRUE À PORTIQUE, COMPRENANT AU MOINS UNE POUTRE DE GRUE

(30) Priorität: 30.03.2012 DE 102012102809
(43) Veröffentlichungstag der Anmeldung: 06.08.2014
(73) Patentinhaber: Terex MHPS GmbH, 40597 Düsseldorf (DE)
(72) Erfinder: PASSMANN, Christoph, 44287 Dortmund (DE); KREISNER, Richard, 58256 Ennepetal (DE); KARDEN, Michael, 58300 Wetter (DE); SCHLIERBACH-KNOBLOCH, Thomas, 58313 Herdecke (DE)
(74) Vertreter: Moser Götze & Partner Patentanwälte mbB
(86) Internationale Anmeldenummer: PCT/EP2013/056778
(87) Internationale Veröffentlichungsnummer: WO 2013/144319

(56) Entgegenhaltungen:
- DE-C- 185 560
- DE-C- 189 383
- DE-U- 1 971 794
- JP-A- H11 165 980
- JP-A- S62 259 987
- JP-U- H 027 284
- JP-U- S5 360 277

## Beschreibung

Die Erfindung betrifft einen Kran, insbesondere Brückenkran oder Portalkran, mit mindestens einem sich horizontal erstreckenden und als Fachwerkträger mit einem Obergurt und einem Untergurt ausgebildeten Kranträger, an dem eine Krankatze mit einem Hebezeug verfahrbar ist, wobei der Kranträger an mindestens einem der beiden gegenüberliegenden Enden einen Adapter umfasst, an dem ein Fahrwerk befestigt ist, wobei der Adapter an dem Obergurt und dem Untergurt relativ zu dem Obergurt und dem Untergurt in einer gewünschten Position ausgerichtet ist und anschließend der Adapter an dem Obergurt und dem Untergurt angeschweißt ist.

Außerdem betrifft die Erfindung ein Verfahren zur Montage eines sich horizontal mit einer Länge erstreckenden und als Fachwerkträger mit einem Obergurt und einem Untergurt ausgebildeten Kranträgers für einen Kran, insbesondere Brückenkran oder Portalkran, an dem eine Krankatze mit einem Hebezeug verfahrbar ist, bei dem in einem Montageschritt die Fachwerkkonstruktion des Kranträgers hergestellt wird, wobei in einem weiteren Montageschritt an mindestens einem der beiden gegenüberliegenden Enden des Kranträgers ein Adapter zur Befestigung eines Fahrwerks angeordnet wird, der relativ zu dem Obergurt und dem Untergurt ausgerichtet wird und dann der Adapter in einer gewünschten Position an dem Obergurt und dem Untergurt angeschweißt wird.

Ein derartiger Kran ist aus der JP H02 7284 U bekannt.

Aus der deutschen Patentschrift DE 260 030 ist ein sogenannter Zwei-Träger-Portalkran mit zwei horizontalen Kranträgern und zwei vertikalen Stützträgern bekannt, die einen Portalrahmen des Portalkrans bilden. Die Kranträger verlaufen parallel und mit Abstand zueinander. An unteren Enden der Stützträger ist jeweils ein Fahrwerk angeordnet, über die der Portalkran in einer quer zur Längsrichtung der Kranträger verlaufenden Fahrtrichtung verfahrbar ist. Auf und entlang der Kranträger ist eine Krankatze mit einem Seilzug verfahrbar. Entsprechend der Bauweise als Zwei-Träger-Kran wird ein Lastaufnahmemittel des auf der Krankatze angeordneten Seilzugs zwischen beiden Kranträgern abgelassen beziehungsweise angehoben. Die Kranträger sind als Fachwerkträger ausgebildet und umfassen jeweils einen Obergurt und einen Untergurt, die jeweils horizontal und parallel zueinander ausgerichtet sind.

Die Ober- und Untergurte der beiden Kranträger sind über vertikal verlaufende stabförmige Pfosten sowie diagonal verlaufende stabförmige Streben miteinander verbunden. Die beiden Kranträger sind an ihren Enden über Querstäbe und Streben miteinander zu einem Rahmen verbunden. Entlang der Längsrichtung der Kranträger sind zwischen dem Ober- und Untergurt nach Art eines Fachwerks stabförmige Pfosten und Streben vorgesehen, die jeweils einen Obergurt mit dem vertikal darunter angeordneten Untergurt verbinden.

Die deutsche Gebrauchsmusterschrift DE 1 971 794 U beschreibt einen Zwei-Träger-Brückenkran, dessen zwei horizontale Kranträger über an deren jeweiligen Enden angeordnete Kopfträger miteinander verbunden und zusammen in einer quer zur Längsrichtung der Kranträger verlaufenden Fahrtrichtung verfahrbar sind. Beide Kranträger sind gleichartig als Fachwerkträger ausgebildet und umfassen jeweils plattenförmige Obergurte, stabförmige Untergurte und stabförmige Pfosten.

Die Patentschrift DE 31 09 834 C2 betrifft einen Turmkran mit einem Mast und einem Kranausleger, die als Fachwerkkonstruktionen ausgebildet sind. Der quaderförmige Mast umfasst vier L- förmige und vertikal ausgerichtete Stützträger, von denen jeweils zwei benachbarte Stützträger über dreieckförmige Platten miteinander verbunden sind. Hierbei sind die Platten mit ihren Eckbereichen und/oder einer ihrer Seiten an den Stützträgern befestigt. Zumindest ein Teil der Seiten der Platten sind abgekantet und bilden Versteifungsrippen aus.

Des Weiteren ist aus dem deutschen Gebrauchsmuster DE 1 971 793 U1 bereits ein als Kastenträger ausgebildeter Kranträger eines Brückenkrans bekannt. Der Kranträger ist an seinen beiden gegenüber liegenden Enden über Anschlusselemente jeweils an einen Kopfträger angeschraubt wird. Die Kopfträger tragen Fahrwerke, mit denen der Brückenkran entlang von Schienen verfahrbar ist. Die Anschlussplatten bestehen im Wesentlichen aus einer rechteckigen Grundplatte, auf der jeweils nach innen versetzt zwei rechteckige Befestigungsplatten angeschweißt sind. Die Befestigungsplatten stehen jeweils rechtwinklig auf der Grundplatte und sind parallel sowie mit einem Abstand zueinander angeordnet, der etwa der Breite des Kranträgers entspricht. Somit können die Anschlusselemente mit ihren Befestigungsplatten über die Enden der Kranträger aufgeschoben, ausgerichtet und in der gewünschten Position angeschweißt werden.

Der Erfindung liegt die Aufgabe zugrunde, einen Kran, insbesondere Brückenkran oder Portalkran, mit mindestens einem verbesserten Kranträger bereit zu stellen.

Diese Aufgabe wird durch einen Kran, insbesondere Brückenkran oder Portalkran, mit den Merkmalen des Anspruchs 1 sowie ein Verfahren zur Montage eines Kranträgers mit den Merkmalen des Anspruchs 7 gelöst. In den Unteransprüchen 2 bis 6 und 8 sind vorteilhafte Ausgestaltungen der Erfindung angegeben.

Bei einem Kran, insbesondere Brückenkran oder Portalkran, mit mindestens einem sich horizontal erstreckenden und als Fachwerkträger mit einem Obergurt und einem Untergurt ausgebildeten Kranträger, an dem eine Krankatze mit einem Hebezeug verfahrbar ist, wobei der Kranträger an mindestens einem der beiden gegenüberliegenden Enden einen Adapter umfasst, an dem ein Fahrwerk befestigt ist, wobei der Adapter an dem Obergurt und dem Untergurt relativ zu dem Obergurt und dem Untergurt in einer gewünschten Position ausgerichtet ist und anschließend der Adapter an dem Obergurt und dem Untergurt angeschweißt ist, wird der mindestens eine Kranträger in vorteilhafter Weise dadurch verbessert, dass der Adapter eine Anschlussplatte zur Befestigung an dem Fahrwerk, eine Kopfplatte zur Befestigung an dem Obergurt und Adapterwände zur Befestigung an dem Untergurt umfasst, dass an der Kopfplatte die Adapterwände befestigt sind, die Kopfplatte horizontal auf dem Obergurt des Kranträgers aufliegt und mit dem Obergurt in der gewünschten Position verschweißt ist und die Adapterwände im Bereich des Untergurts enden und mit dem Untergurt in der gewünschten Position verschweißt sind. Gegenüber der konventionellen Herstellung von Kranträgern auf Übermaß und anschließendem Abbrennen beziehungsweise Kürzen der Bauteile auf Maß beziehungsweise die gewünschte Länge, wird bei dem verbesserten Kranträger ein erheblich verringerter Fertigungsaufwand durch Vermeiden entsprechender Nacharbeiten erreicht. Ebenso kann das gegebenenfalls notwendige Anschweißen von Distanzblechen vermieden werden. Hierdurch wird auch eine Montageerleichterung erzielt. Durch den erfindungsgemäßen Aufbau und die Verwendung des ausrichtbaren Adapter kann somit insgesamt eine Herstellkostenreduzierung erreicht werden. Da der Adapter gegenüber dem Ober- und Untergurt in allen Raumrichtungen bewegbar ist, können neben der Länge des Kranträgers auch Fertigungsungenauigkeit des Kranträgers ausgeglichen werden. In einem Montageschritt kann der Adapter somit vorteilhafter Weise aus an der Kopfplatte befestigten Adapterwänden ohne die Anschlussplatte bestehen. Dann wird die Kopfplatte horizontal auf dem Obergurt des Kranträgers aufgelegt und mit dem Obergurt nach einem Ausrichten in der gewünschten Position verschweißt und die im Bereich des Untergurts endenden Adapterwände mit dem Untergurt nach einem Ausrichten in der gewünschten Position verschweißt. Alternativ kann hierbei bereits die Anschlussplatte an der Kopfplatte und den Adapterwänden angeschweißt sein.

Hierbei ist vorteilhafter Weise vorgesehen, dass der Adapter zumindest in einer Längsrichtung des Kranträgers relativ zu dem Obergurt und dem Untergurt ausrichtbar ist. Somit muss der als Fachwerkträger ausgebildete Kranträger nicht so genau auf Länge gefertigt werden und auch Verdrehungen oder andere Ungenauigkeiten des Kranträgers können beim Ausrichten und Anschweißen des Adapters berücksichtigt werden.

In konstruktiv einfacher Bauweise ist vorgesehen, dass der Kranträger an jedem der beiden gegenüberliegenden Enden einen Adapter umfasst. Hierdurch wird der Längenbereich, um den die Länge des Kranträgers verstellt werden kann, in vorteilhafter Weise vergrößert.

Vorteilhafter Weise ist vorgesehen, dass an der Kopfplatte zwei parallel und voneinander beabstandet verlaufende Adapterwände angeordnet sind.

In einen weiteren Montageschritt kann vorgesehen sein, dass ein zweites Ausrichten dadurch erfolgt, dass an der bereits ausgerichteten Kopfplatte und den Adapterwänden die Anschlussplatte nach Ausrichten in der gewünschten Position angeschweißt wird.

In vorteilhafter Weise ist auch vorgesehen, dass über in der Anschlussplatte vorgesehene Bohrungen ein Fahrwerk an jedem Adapter befestigbar ist.

Bei einem Verfahren zur Montage eines sich horizontal mit einer Länge erstreckenden und als Fachwerkträger mit einem Obergurt und einem Untergurt ausgebildeten Kranträgers für einen Kran, insbesondere Brückenkran oder Portalkran, an dem eine Krankatze mit einem Hebezeug verfahrbar ist, bei dem in einem Montageschritt die Fachwerkkonstruktion des Kranträgers hergestellt wird, wobei in einem weiteren Montageschritt an mindestens einem der beiden gegenüberliegenden Enden des Kranträgers ein Adapter zur Befestigung eines Fahrwerks angeordnet wird, der relativ zu dem Obergurt und dem Untergurt ausgerichtet wird und dann der Adapter in einer gewünschten Position an dem Obergurt und dem Untergurt angeschweißt wird, wird der mindestens eine Kranträger in vorteilhafter Weise dadurch verbessert, dass der Adapter zumindest in einer Längsrichtung des Kranträgers relativ zu dem Obergurt und dem Untergurt ausgerichtet wird, dass der an einer Kopfplatte befestigte Adapterwände umfassende Adapter mit seiner Kopfplatte horizontal auf dem Obergurt des Kranträgers aufliegend mit dem Obergurt in der gewünschten Position ausgerichtet und angeschweißt wird und die im Bereich des Untergurts endenden Adapterwände mit dem Untergurt in der gewünschten Position ausgerichtet und angeschweißt werden. Hierdurch kann der Adapter in allen Raumrichtungen, insbesondere entsprechend einer gewünschten Länge, zu dem Ober- und Untergurt vor dem Anschweißen ausgerichtet werden, um etwaig vorhandene Fertigungsungenauigkeiten auszugleichen. Somit muss der als Fachwerkträger ausgebildete Kranträger nicht so genau auf Länge gefertigt werden und auch Verdrehungen oder andere Ungenauigkeiten des Kranträgers können beim Ausrichten und Anschweißen des Adapters berücksichtigt werden. Der zumindest aus Kopfplatte und Adapterwänden bestehende Adapter kann somit Ober- und Untergurt verbinden und gleichzeitig im Raum ausgerichtet angeschweißt werden. Hierbei kann eine Anschlussplatte zur Befestigung der Fahrwerke bereits an der Kopfplatte und den Adapterwänden befestigt sein.

Alternativ ist vorgesehen, dass nach erfolgtem Ausrichten und Anschweißen der Kopfplatte und den Adapterwänden und Berücksichtigen bei der Gesamtlänge des Kranträgers, dass die Anschlussplatte noch fehlt, erst dann an der Kopfplatte und den Adapterwänden die Anschlussplatte in der gewünschten Position ausgerichtet und angeschweißt wird. Somit sind bei der Montage zwei hintereinander folgende Ausrichtmöglichkeiten gegeben.

In vorteilhafter Weise ist vorgesehen, dass an jedem der beiden gegenüberliegenden Enden des Kranträgers ein Adapter angeordnet, verschoben und angeschweißt wird. Jeder der Adapter kann hierbei einschrittig oder zweischrittig an gebaut werden. Bevorzugt ist, dass an einem Ende des Kranträgers ein Adapter mit befestigter Anschlussplatte und an dem anderen Ende des Kranträgers ein Adapter ohne befestigte Anschlussplatte zum Einsatz kommen. An einem Ende erfolgt somit eine doppelte Ausrichtung.

Zwei Ausführungsbeispiele der Erfindung werden anhand der Zeichnungen näher erläutert. Es zeigen:
Figur 1a einen als Ein-Träger-Kran ausgebildeten Brückenkran,
Figur 1b einen als Zwei-Träger-Kran ausgebildeten Brückenkran,
Figur 2a eine perspektivische Ansicht eines erfindungsgemäßen Kranträgers für einen Brückenkran gemäß Figur 1 a,
Figur 2b eine perspektivische Ansicht zweier erfindungsgemäßer Kranträger für einen Brückenkran gemäß Figur 1b,
Figur 3 eine Querschnittsansicht des Kranträgers gemäß Figur 2a,
Figur 4a eine Seitenansicht eines Adapters für einen Kranträger und
Figur 4b eine in Längsrichtung des Kranträgers gesehene Ansicht des Adapters.

Die nachfolgend anhand von Brückenkranen vorgenommenen Erläuterungen gelten entsprechend auch für Portalkrane.

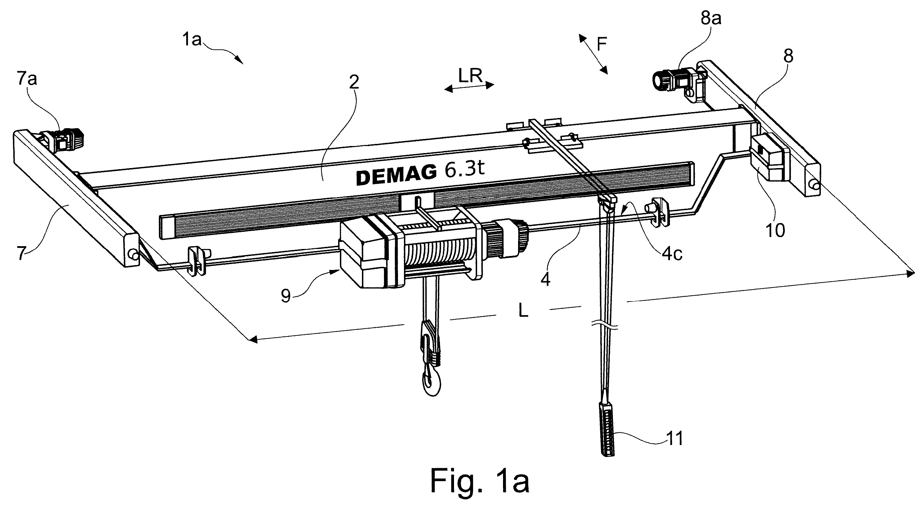

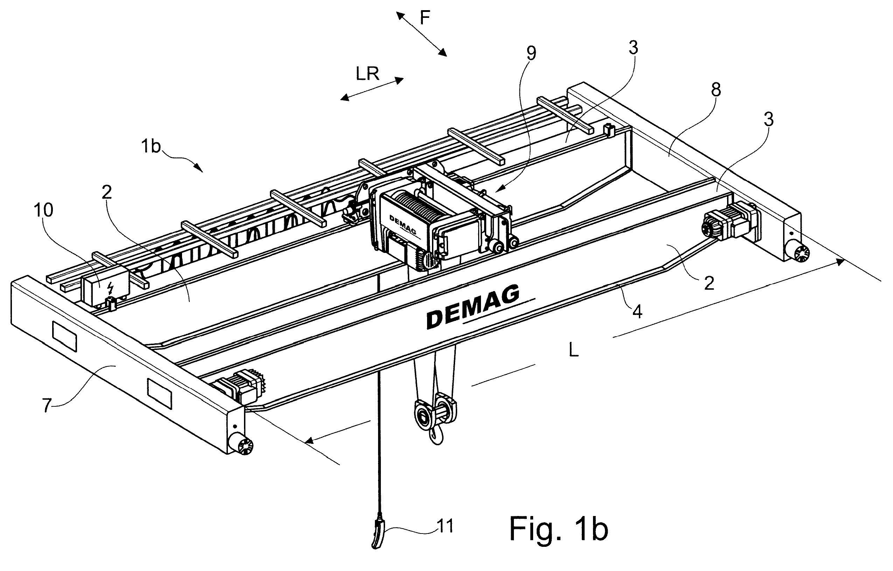

Die Figur 1 a zeigt einen konventionellen als Ein-Träger-Brückenkran ausgebildeten ersten Kran 1 a. Der erste Kran 1 a umfasst einen als Kastenträger ausgebildeten Kranträger 2, der horizontal ausgerichtet ist und sich mit einer Länge L in seiner Längsrichtung LR erstreckt. An den sich gegenüber liegenden Enden des Kranträgers 2 sind erste und zweite Fahrwerke 7, 8 befestigt, so dass eine in der Draufsicht im Wesentlichen doppel-T-förmige Kranbrücke ausgebildet ist. Über die Fahrwerke 7, 8 ist der erste Kran 1 a in einer horizontalen Fahrtrichtung F quer zur Längsrichtung LR des Kranträgers 2 auf nicht dargestellten Schienen verfahrbar. Die Schienen sind üblicherweise gegenüber einem Boden hochliegend angeordnet und können hierfür beispielsweise über eine geeignete Tragkonstruktion aufgeständert oder an sich gegenüberliegenden Gebäudewänden befestigt sein. Um den ersten Kran 1 a beziehungsweise dessen Kranträger 2 zu verfahren, wird das erste Fahrwerk 7 von einem ersten Elektromotor 7a und das zweite Fahrwerk 8 von einem zweiten Elektromotor 8a angetrieben. An dem Kranträger 2 ist eine Krankatze 9 mit einem als Seilzug ausgebildeten Hebezeug aufgehängt, die über nicht dargestellte Fahrwerke quer zur Fahrtrichtung F des ersten Krans 1 a und entlang der Längsrichtung LR des Kranträgers 2 verfahrbar ist. Die Krankatze 9 ist entlang und auf seitlich hervor ragenden Laufflächen 4c eines Untergurts 4 des Kranträgers 2 verfahrbar. Der erste Kran 1 a umfasst zudem eine Kransteuerung 10 und einen hiermit verbundenen Hängesteuerschalter 11, worüber der erste Kran 1 a beziehungsweise die Elektromotoren 7a, 8a sowie die Krankatze 9 mit dem Seilzug getrennt voneinander angesteuert und bedient werden können.

In der Figur 1b ist ein konventioneller als Zwei-Träger-Brückenkran ausgebildeter zweiter Kran 1 b gezeigt, der gegenüber dem als Ein-Träger-Brückenkran ausgebildeten ersten Kran 1 a zwei Kranausleger 2 umfasst. An den Enden der beiden Kranträger 2 sind wiederum Fahrwerke 7, 8 befestigt, so dass in der Draufsicht gesehen ein Rahmen ausgebildet wird. Auch der zweite Kran 1 b umfasst eine Krankatze 9 mit einem als Seilzug ausgebildeten Hebezeug. Die Krankatze 9 ist jedoch nicht an den Untergurten 4 der Kranträger 2 aufgehängt, sondern läuft auf Obergurten 3 der beiden Kranträger 2 ab. Dementsprechend kann die mittig zwischen Kranträgern 2 angeordnete Krankatze 9 entlang der Längsrichtung LR der Kranträger 2 und zwischen den beiden Kranträgern 2 verfahren werden. Hierbei ist ein Lastaufnahmemittel des an der Krankatze 9 angeordneten Seilzugs zwischen beiden Kranträgern 2 absenkbar beziehungsweise anhebbar.

Im Übrigen gilt für den zweiten Kran 1 b das zu dem ersten Kran 1 a Ausgeführte entsprechend.

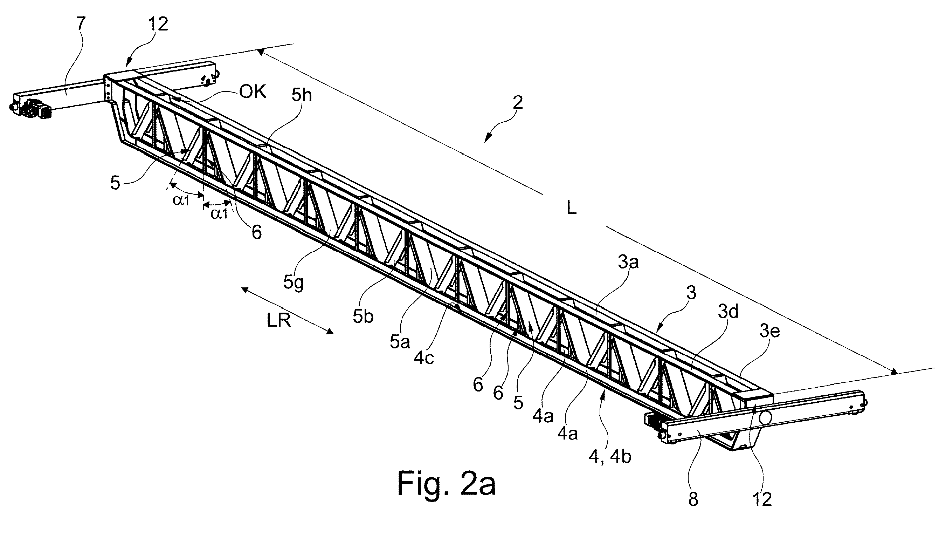

Die Figur 2a zeigt eine perspektivische Ansicht eines erfindungsgemäßen Kranträgers 2 für einen gemäß der Figur 1a als Ein-Träger-Brückenkran ausgebildeten Kran 1 a. Der Kranträger 2 ist hierbei nicht konventionell als Kastenträger sondern als Fachwerkträger ausgebildet.

Die Fachwerkkonstruktion des Kranträgers 2 umfasst im Wesentlichen einen Obergurt 3, einen Untergurt 4, diagonal verlaufende Streben 5 und vertikale Pfosten 6. Der Obergurt 3 und der Untergurt 4 erstrecken sich jeweils geradlinig, parallel und voneinander beabstandet in der Längsrichtung LR des Kranträgers 2 zwischen den Fahrwerken 7, 8. Hierbei sind der Obergurt 3 und der Untergurt 4 vertikal voneinander beabstandet. Der Obergurt 3 setzt sich aus zwei in einer horizontalen Ebene angeordneten und horizontal voneinander beabstandeten ersten und zweiten Obergurtprofilen 3d, 3e zusammen.

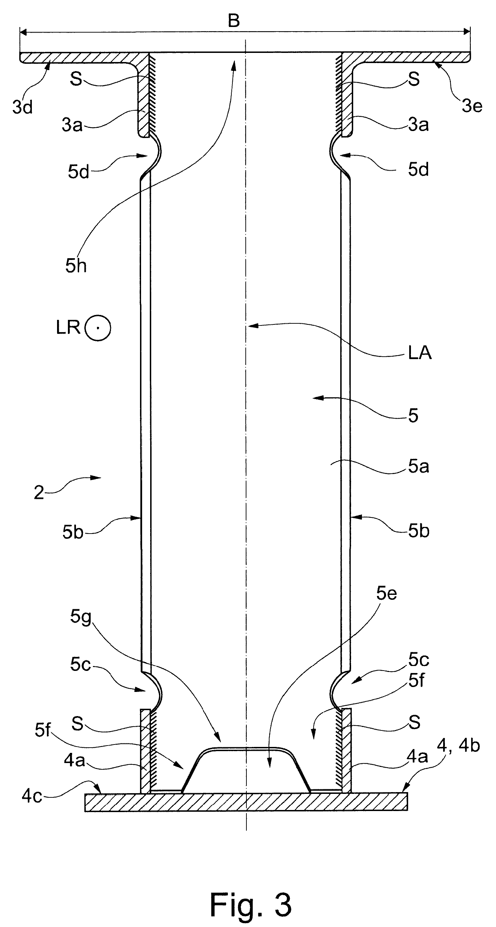

Die beiden Obergurtprofile 3d, 3e sind von einem L- beziehungsweise Winkel-ProfilTräger gebildet. Der Untergurt 4 wird von einem Flachprofil 4b mit zwei senkrecht aufstehenden Schenkeln 4a gebildet, so dass in etwa ein U-Profil-förmiger Querschnitt gegeben ist. Hierbei ist das Flachprofil 4b seitlich über die Schenkel 4a hinaus verlängert (siehe auch Figur 3). Die seitlichen Verlängerungen des Flachprofils 4b jeweils eine Lauffläche 4c für Fahrwerke der hier nicht dargestellten Krankatze 9 aus. Durch den Abstand der in Längsrichtung LR gesehen äußersten Kanten der Obergurtprofile 3d, 3e oder des Flachprofils 4b ergibt sich außerdem eine Breite B des Kranträgers 2.

Der Obergurt 3 und der Untergurt 4 sind über mehrere flächenförmig ausgebildete Streben 5 sowie mehrere in einer ersten Ausführungsform stabförmig ausgebildete Pfosten 6 miteinander verbunden. Hierbei sind die Streben 5 als Blechprofil mit einer Hauptfläche 5a mit einem im Wesentlichen rechteckigen Querschnitt ausgebildet, wobei deren Längsseiten zur Erhöhung der Beulsteifigkeit zumindest in einem mittleren Bereich in Form von Nebenflächen 5b umgekantet sind.

Die Fachwerkkonstruktion des Kranträgers 2 wird an den gegenüberliegenden Enden des Obergurtes 3 und des Untergurtes 4 über jeweils einen Adapter 12 abgeschlossen. Über diese Adapter 12 werden der Obergurt 3 und der Untergurt 4 zu einem Rahmen verbunden. Da der Untergurt 4 insgesamt kürzer als der Obergurt 3 ist, hat der Adapter 12 einen diagonalen Verlauf und der Rahmen des Kranträgers 2 ist insgesamt von unten nach oben erweitert und trapezförmig ausgebildet. Außerdem umfasst der Adapter 12 im Bereich des Obergurtes 3 und an der dem Obergurt 3 abgewandten Seite eine Anschlussplatte 12a, an der eines der Fahrwerke 7, 8 beziehungsweise deren Träger befestigt wird.

Ausgehend von einem der beiden Adapter 12 in Längsrichtung LR des Kranträgers 2 gesehen ist eine erste Strebe 5 mit dem Untergurt 4 verbunden und verläuft in Längsrichtung LR in einem ersten Anstellwinkel α1 geneigt in Richtung des Obergurts 3 und ist dort in einem oberen Knotenpunkt OK befestigt. Der erste Anstellwinkel α1 ist hierbei eingeschlossen von der ersten Strebe 5 und einem in dem oberen Knotenpunkt OK endenden Pfosten 6. Vorzugsweise liegt der erste Anstellwinkel α1 in einem Bereich von 35° bis 55° und beträgt besonders bevorzugt 45°, Im oberen Knotenpunkt OK schließt sich dann eine zweite Strebe 5 an, die schräg unter dem Anstellwinkel α1 nach unten zu dem Untergurt 4 verläuft. Dies wiederholt sich so lange, bis von den Streben 5 das gegenüberliegende Ende des Kranträgers 2 erreicht ist. Hierbei wird immer eine gerade Anzahl von Streben 5 verwendet, so dass die letzte Strebe 5 am Untergurt 4 endet. Je nach Länge L des Kranträgers 2 wird vor der Montage der Anstellwinkel α1 bestimmt, so dass eine gerade Anzahl von Streben 5 mit jeweils gleicher Länge und unter gleichem Anstellwinkel α1 zum Einsatz kommt. Außerdem ist im Bereich jedes oberen Knotenpunktes OK noch zusätzlich ein Pfosten 6 befestigt, der vertikal zum Untergurt 4 verläuft und dort befestigt ist. Hierdurch wird der als Schiene dienende und hierfür die Lauffläche 4c ausbildende Untergurt 4 gegen Durchbiegung verstärkt.

Die Streben 5 sind innerhalb der Fachwerkkonstruktion des Kranträgers 2 so ausgerichtet, dass sich jeweils ihre Hauptfläche 5a quer zur Längsrichtung LR des Kranträgers 2 erstreckt. Außerdem sind die Streben 5 mit ihren unteren ersten Strebenenden 5g zwischen den nach oben zeigenden Schenkeln 4a des Untergurts 4 angeordnet. An ihren oberen zweiten Strebenenden 5h sind die Streben 5 zwischen den beiden Obergurtprofilen 3d, 3e angeordnet, wobei die Obergurtprofile 3d, 3e mit den Innenseiten ihrer fluchtend zu den Schenkeln 4a des Untergurts 4 vertikal ausgerichteten Schenkeln 3a (siehe Figur 3) mit den Streben 5 verschweißt sind. Auch die stabförmigen Pfosten 6 sind zwischen den Schenkeln 4a des Untergurtes 4 und den Schenkeln 3a der Obergurtprofile 3d, 3e angeordnet und mit deren Innenseiten verschweißt. Quer zu der Längsrichtung LR des Kranträgers 2 gesehen ist zwischen den Schenkeln 3a, 4a des Obergurtes 3 beziehungsweise Untergurtes 4 also immer nur eine Strebe 5 vorgesehen.

Des Weiteren ist Figur 2a zu entnehmen, dass jeweils zwei vertikale Pfosten 6 zwischen zwei satteldachartig schräg beziehungsweise diagonal verlaufenden Streben 5 angeordnet sind. Die einander auf diese Weise zugeordneten Streben 5 und Pfosten 6 treffen an einem gemeinsamen oberen Knotenpunkt OK an den Obergurten 3 aufeinander, wobei jede Strebe 5 mit dem zugehörigen Pfosten 6 im Bereich des entsprechenden oberen Knotenpunktes OK an den Obergurten 3 einen gleich großen ersten Anstellwinkel α1 bildet. Aufgrund der geraden Anzahl an entsprechend paarweise angeordneten Streben 5 fällt somit an beiden Enden des Kranträgers 2 die letzte Strebe 5 zu dem Untergurt 4 hin ab.

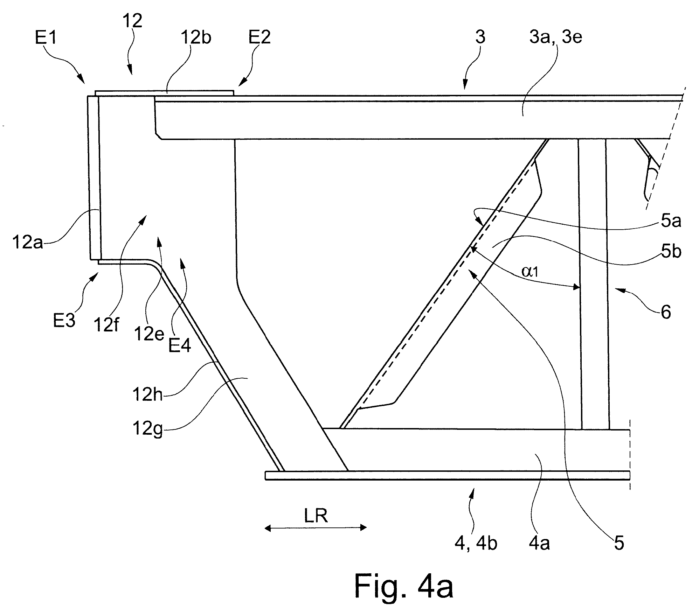

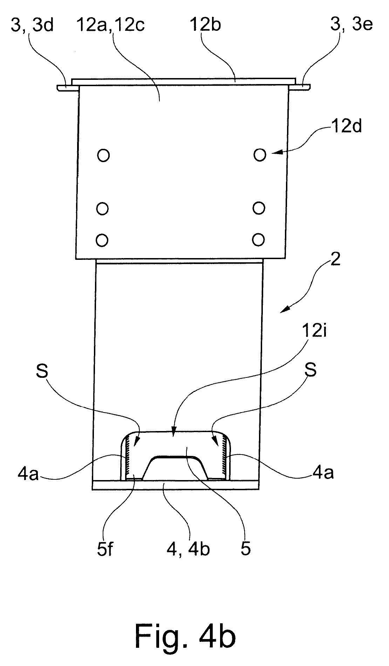

Darüber hinaus ist der Kranträger 2 über Adapter 12 (siehe auch Figur 4) maßgenau auf die Länge L einstellbar, indem die Adapter 12 auf die sich gegenüberliegenden Enden des Obergurts 3 des Kranträgers 2 aufgeschoben werden, anschließend in dessen Längsrichtung LR entsprechend verschoben und abschließend mit dem Kranträger 2 verschweißt werden.

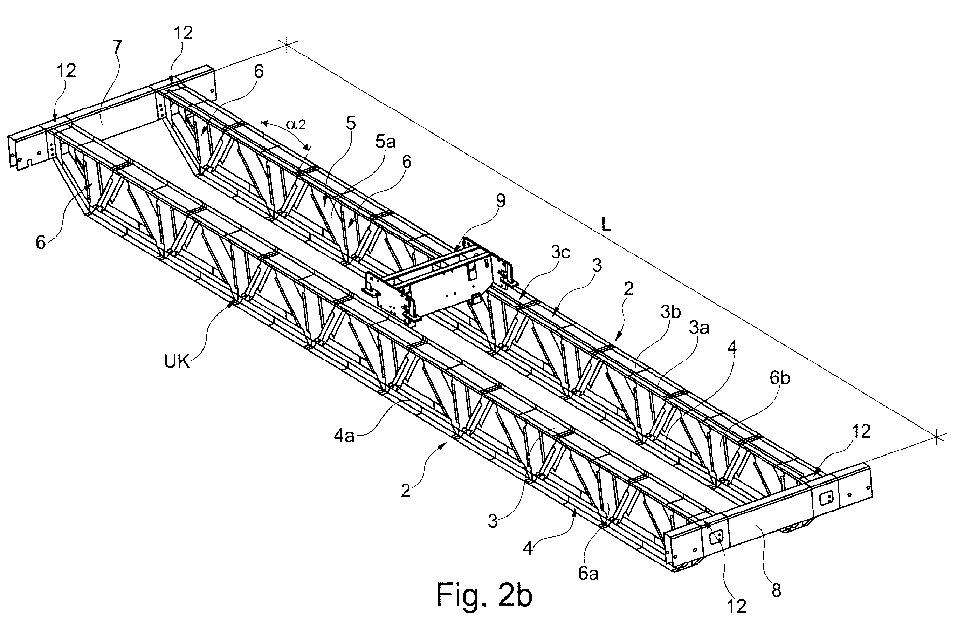

In der Figur 2b ist eine perspektivische Ansicht von zwei erfindungsgemäß als Fachwerkträger ausgebildeten Kranträgern 2 für einen gemäß der Figur 1b als Zwei-Träger-Brückenkran ausgebildeten Kran 1 b dargestellt. Beide Kranträger 2 sind über an ihren gegenüberliegenden Enden aufgeschobene Adapter 12 (siehe auch Figur 4) auf die gewünschte Länge L eingestellt und parallel voneinander beabstandet angeordnet. Die ebenfalls dargestellten Fahrwerke 7, 8 sind über die Adapter 12 an den Enden der beiden Kranträger 2 befestigt.

Die Fachwerkkonstruktionen der beiden Kranträger 2 des zweiten Krans 1 b umfassen wiederum einen Untergurt 4 sowie einen demgegenüber längeren Obergurt 3, die jeweils in gleicher Weise wie der Untergurt 4 des ersten Krans 1 a einteilig ausgebildet sind. Dementsprechend wird auch der Obergurt 3 jedes Kranträgers 2 von einem Flachprofil 3b mit Schenkeln 3a mit einem in etwa U-Profil-förmigen Querschnitt gebildet. Die nach unten gerichteten Schenkel 3a der Flachprofile 3b der Obergurte 3 und die nach oben gerichteten Schenkel 4a der Flachprofile 4b der Untergurte 4 sind einander zugewandt.

Der Obergurt 3 jedes Kranträgers 2 ist mit dem zugehörigen Untergurt 4 über mehrere flächenförmig ausgebildete Streben 5 und mehrere in einer zweiten Ausführungsform ebenfalls flächenförmig ausgebildete und vertikal ausgerichtete Pfosten 6 verbunden. Der grundsätzliche Aufbau der in dieser zweiten Ausführungsform ausgebildeten flächenförmigen Pfosten 6 entspricht - bei entsprechend angepassten Maßen - im Wesentlichen dem Aufbau der flächenförmigen Streben 5. Anstelle von zwei stabförmigen Pfosten 6 wird jedoch nur ein flächenförmiger Pfosten 6 zwischen zwei benachbarten Streben 5 angeordnet. Hierbei erstreckt sich jeder in der flächenförmigen zweiten Ausführungsform ausgebildete Pfosten 6 mit einer Hauptfläche 6a quer zur Längsrichtung LR des Kranträgers 2 und mit rechtwinklig dazu abgekanteten Nebenflächen 6b in dieser Längsrichtung LR. Die flächenförmigen Pfosten 6 können außerdem so angeordnet beziehungsweise ausgerichtet sein, dass die Nebenflächen 6b zu einem der Enden des Kranträgers 2 hin oder hiervon weg zeigen.

Es ist jedoch grundsätzlich auch möglich, die Kranträger 2 des als Ein-Träger-Kran ausgebildeten ersten Krans 1 a mit den in der zweiten Ausführungsform ausgebildeten flächenförmigen Pfosten 6 zu versehen.
Die Streben 5 sind für die beiden Kranträger 2 des zweiten Krans 1 b identisch, das heißt wie bei dem ersten Kran 1 a nach Figur 1 a spiegelsymmetrisch bezüglich ihrer Längsachse LA ausgebildet.

Außerdem ist in Figur 2b angedeutet, dass die Krankatze 9 für den nicht dargestellten Seilzug nicht an den Untergurten 4 der Kranträger 2 aufgehängt, sondern auf deren Obergurten 3 aufgesetzt ist. Hierfür ist, vorzugsweise mittig, auf jedem der beiden Obergurte 3 eine Laufschiene mit einer entsprechenden Lauffläche 3c vorgesehen, so dass die Krankatze 9 zwischen den Kranträgern 2 angeordnet und dementsprechend, wie in Figur 1b dargestellt, in der Längsrichtung LR zwischen den Fahrwerken 7, 8 des zweiten Krans 1 b verfahrbar ist.

Des Weiteren ist Figur 2b zu entnehmen, dass die Streben 5 in gleicher Weise wie bei dem in Figur 2a gezeigten Kranträger 2 satteldachartig angeordnet sind. Hierbei ist jedoch zwei benachbarten Streben 5 nur noch ein flächenförmig ausgebildeter Pfosten 6 in der Weise zugeordnet, dass Streben 5 und der Pfosten 6 an einem gemeinsamen unteren Knotenpunkt UK an den Untergurten 4 aufeinander treffen. Somit bildet jede Strebe 5 mit dem zugehörigen flächenförmigen Pfosten 6 im Bereich des entsprechenden unteren Knotenpunktes UK an den Untergurten 4 einen gleich großen zweiten Anstellwinkel α2, der ebenso wie der erste Anstellwinkel α1 vorzugsweise in einem Bereich von 35° bis 55° liegt und besonders bevorzugt 45° beträgt. Aufgrund der geraden Anzahl an entsprechend paarweise angeordneten Streben 5 fällt somit an beiden Enden des Kranträgers 2 die letzte Strebe 5 zu dem Untergurt 4 hin ab. Anders als bei dem in Figur 2a gezeigten Kranträger 2 ist jedoch an jedem Ende des Kranträgers 2 nach der letzten Strebe 5 noch ein flächenförmiger Pfosten 6 angeordnet.

Die Figur 3 zeigt eine Querschnittsansicht des Kranträgers 2 gemäß der Figur 2a. Der Figur 3 ist insbesondere der prinzipielle Aufbau der Streben 5 zu entnehmen, der im Wesentlichen dem grundsätzlichen Aufbau der in der zweiten Ausführungsform ebenfalls flächenförmig ausgebildeten Pfosten 6 entspricht, sich hiervon hinsichtlich der Maße unterscheiden kann. Dementsprechend gelten die Ausführungen zu Figur 3 auch für die in der Figur 2b gezeigten Kranträger 2 sowie die hierbei in der flächenförmigen zweiten Ausführungsform verwendeten Pfosten 6. Der Einfachheit halber wird zur Beschreibung der Figur 3 nur auf die Streben 5 Bezug genommen; die hierbei erwähnten Bezugszeichen 5a bis 5h bezeichnen analog die entsprechenden Elemente der in der flächenförmigen Pfosten 6, die an den gleichen Stellen als Bezugszeichen 6a bis 6h eingezeichnet und in der Bezugszeichenliste aufgeführt sind.

Die in Figur 3 dargestellte flächenförmig ausgebildete Strebe 5 umfasst eine langgestreckte Form mit einer im Wesentlichen rechteckförmigen Hauptfläche 5a. Die Hauptfläche 5a erstreckt sich entlang der Längsachse LA der Strebe 5 und jedenfalls in einem mittleren Bereich über mindestens die Hälfte der Breite B des Kranträgers 2 quer zu der Längsrichtung LR des Kranträgers 2, insbesondere über mindestens die Hälfte des Abstandes zwischen den Innenseiten der Schenkel 3a oder der Schenkel 4a. Die Streben 5 werden vorzugsweise durch Laserschneiden aus einem Stahlblech hergestellt. Außerdem weisen die Streben 5 ein unteres erstes und ein unteres zweites Strebenende 5g, 5h auf. Insbesondere werden an dem unteren ersten Strebenendes 5g im Bereich der unteren Ecken der Strebe 5 zwei Strebenfüße 5f ausgebildet, indem mittig an dem unteren ersten Strebenende 5g in der Hauptfläche 5a eine Aussparung 5e vorgesehen ist. Die Aussparung 5e weist einen bezogen auf die Längsachse LA spiegelsymmetrischen und in etwa trapezförmigen Querschnitt auf. Die Streben 5 tauchen mit ihren unteren ersten Strebenenden 5g zwischen den nach oben zeigenden Schenkeln 4a des Untergurts 4 ein. Hierbei liegen die Strebenfüße 5f mit ihren sich zwischen den unteren Ausnehmungen 5c und dem unteren ersten Strebenende 5g erstreckenden Längsseiten der Hauptfläche 5a an den Innenseiten der Schenkel 4a des Untergurts 4 an und werden an die Schenkel 4a angeschweißt. Die Strebenfüße 5f liegen jedoch auf dem Flachprofil 4b des Untergurts 4 nicht auf. Auch kann der Figur 3 entnommen werden, dass die beiden Obergurtprofile 3d, 3e mit ihren vertikalen Schenkeln 3a an den entsprechenden Längsseiten der Hauptfläche 5a anliegen, die sich zwischen den oberen Ausnehmungen 5d und dem oberen zweiten Strebenende 5h erstrecken, und dass dort eine Schweißverbindung erfolgt.

Es ist ebenso denkbar, dass die Schenkel 3a, 4a nicht gleich weit voneinander beabstandet sind. Dementsprechend sind dann auch die äußeren Längsseiten der Strebenenden 5g, 5h, insbesondere auch der Strebenfüße 5f, unterschiedlich weit voneinander beabstandet, um an den vertikal nicht fluchtend angeordneten Schenkeln 3ä, 4a anliegen und hieran angeschweißt werden zu können.
Im Bereich ihrer sich gegenüberliegenden unteren ersten und oberen zweiten Strebenenden 5g, 5h sind an beiden Längsseiten der Strebe 5 zwei untere Ausnehmungen 5c und zwei obere Ausnehmungen 5d vorgesehen. Die unteren und oberen Ausnehmungen 5c, 5d grenzen an die Schenkel 3a, 4a der Ober- und Untergurte 3, 4 jeweils an, um eine Entlastung der Schweißnaht S beziehungsweise des zugehörigen Schweißnahtauslaufs zu erreichen. Die Ausnehmungen 5c, 5d sind rund, vorzugsweise kreisbogenförmig, ausgebildet.

Zwischen den unteren und oberen Ausnehmungen 5c, 5d schließt sich an jeder Längsseite der Strebe 5 eine rechtwinklig abgekantete und parallel zur Längsachse LA verlaufende Nebenfläche 5b an die Hauptfläche 5a an. Die Nebenflächen 5b sind im Wesentlichen trapezförmig ausgebildet. Dadurch, dass die Nebenflächen 5b beide in dieselbe Richtung abgekantet sind, weist die in Figur 3 abgebildete Strebe 5 zumindest im Bereich der Nebenflächen 5b einen in Richtung der Längsachse LA der Strebe 5 gesehen U-förmigen Querschnitt auf. Denkbar ist ebenfalls, dass die Nebenflächen 5b in gegensätzliche Richtungen abgekantet werden, so dass sich in Richtung der Längsachse LA gesehen zumindest teilweise ein Z-förmiger Querschnitt ergeben würde. Durch Weglassen einer Nebenfläche 5b beziehungsweise durch Vorsehen lediglich einer einzigen Nebenfläche 5b kann die Strebe 5 in entsprechender Weise auch einen zumindest teilweise L-förmigen Querschnitt in Richtung der Längsachse LA gesehen aufweisen. Über die Nebenflächen 5b wird die Beulsteifigkeit der Streben 5 erhöht. Die Nebenflächen 5b befinden sich außerhalb der Schenkel 3a, 4a, so dass nur die nicht umgekanteten Bereiche der Längsseiten der Hauptflächen 5a an die Schenkel 3a, 4a angeschweißt sind.

In einer möglichen Ausführungsform beträgt die Gesamtlänge einer Strebe 890 mm. Hierbei sind dann die Längsseiten der unteren ersten und die oberen zweiten Strebenenden 5g, 5h jeweils mit einer Eintauchlänge von 80 mm zwischen den Schenkeln 3a, 4a der Ober- und Untergurte 3a, 4a eingetaucht beziehungsweise über die genannte Länge mit den Schenkeln 3a, 4a verschweißt. Der Abstand zwischen den eingetauchten Bereichen der Längsseiten und den Nebenflächen 5b, das heißt die Länge der in diesem Bereich ausgebildeten Membrangelenke, beträgt dann jeweils 100 mm. Dementsprechend weisen die Nebenflächen 5b bezogen auf die Längsachse LA eine Nebenflächenlänge von 530 mm auf, das heißt Nebenflächen 5b erstrecken sich in ihrer Längsrichtung über die Nebenflächenlänge von 530 mm.
Die Nebenflächenlängen liegen somit vorzugsweise in einem Bereich von etwa 40% bis 70% der Gesamtlänge der Strebe 5 und die Eintauchlängen in einem Bereich von etwa 5% bis 15% der Gesamtlänge der Strebe 5.

In der Figur 4a ist eine Seitenansicht einer der beiden Adapter 12 gezeigt, die an den sich gegenüberliegenden Enden eines Kranträgers 2 für den ersten Kran 1 a angeordnet sind. Der Kranträger 2 ist als Fachwerkträger mit zwei Obergurtprofilen 3d, 3e ausgebildet. befestigt sind. Erkennbar ist auch eine Strebe 5, die in dem ersten Anstellwinkel α1 zu einem stabförmig ausgebildeten Pfosten 6 angestellt ist.

Außerdem ist der Figur 4a die trapezförmige Ausbildung einer von der Hauptfläche 5a abgekanteten Nebenfläche 5b der Strebe 5 zu entnehmen. Die Nebenfläche 5b ist außerhalb der Schenkel 3a, 4a der Ober- und Untergurte 3, 4 angeordnet und erstreckt sich in einer vertikalen, die Längsrichtung LR der Kranträgers 2 beinhaltenden Ebene.

Um die gewünschte Länge L der Kranträger 2 einzustellen, wird der Adapter 12 an den Obergurt 3 und den Untergurt 4 angelegt, in Längsrichtung LR ausgerichtet und angeschweißt. Es können je Adapter Längenänderungen von +/- 5 Millimeter in der Längsrichtung LR erreicht werden. Dementsprechend weist der Kranträger 2 vor dem Anbringen der Adapter 12 bereits nahezu die gewünschten Länge L auf. Hierbei ist die Konstruktion des Adapters 12 so gewählt, dass dieser zur Feineinstellung der Länge L relativ zu den Obergurtprofilen 3d, 3e und dem Untergurt vor dem Verschweißen verschiebbar ist. Bei dieser Feineinstellung können auch andere Fertigungstoleranzen des Kranträgers 2 wie Verdrehungen und Verbiegungen ausgeglichen werden. Der Adapter 12 ist hierzu nicht nur relativ zur Längsrichtung LR verschiebbar, sondern auch um eine vertikale Achse verdrehbar und um eine horizontale und quer zur Längsrichtung LR ausgerichtet Achse verdrehbar, bevor dieser mit dem Obergurt 3 und dem Untergurt 4 verschweißt wird.

Das in Figur 4a abgebildete Ende des Kranträgers 2 zeigt den Abschluss der Fachwerkkonstruktion, wobei die beiden Obergurtprofile 3d, 3e des Obergurts 3 mit dem Untergurt 4 zu einem Rahmen verbunden werden. Hierzu umfasst der Adapter 12 zwei identisch ausgebildete und sich in Längsrichtung LR erstreckende rippenartige Adapterwände 12e, die an ihren oberen und unteren Enden mit den Schenkeln 3a, 4a verbunden werden. Die Adapterwände 12e sind hierbei voneinander beabstandet und parallel zueinander sowie parallel zu den Schenkeln 3a, 4a angeordnet und zeigen mit ihren Flächen dementsprechend quer zu der Längsrichtung LR des Kranträgers 2.

Jede Adapterwand 12e umfasst einen im Wesentlichen als rechteckförmige und ebene Platte ausgebildeten Kopfteil 12f mit vier Ecken E1 bis E4. An den die obere erste Ecke E1 und die obere zweite Ecke E2 verbindenden Oberseiten der Adapterwände 12e ist eine horizontal ausgerichtete Kopfplatte 12b auf die Adapterwände 12e aufgelegt und mit diesen verschweißt. Die Kopfplatte 12b ist eben und rechteckförmig ausgebildet. An der die erste Ecke E1 mit der vertikal darunter angeordneten dritten Ecke E3 verbindenden Anschlussseite der Adapterwände 12e ist die vertikal ausgerichtete Anschlussplatte 12a befestigt. Auch die Anschlussplatte 12a ist eben und rechteckförmig ausgebildet, wobei die Anschlussplatte 12a in Längsrichtung LR gesehen seitlich über die Adapterwände 12e hinaus ragt. Die Anschlussplatte 12a und die Kopfplatte 12b sind somit im Wesentlichen rechtwinklig zueinander angeordnet und treffen im Bereich der ersten Ecke E1 aufeinander. Im Bereich einer der ersten Ecke E1 diagonal gegenüberliegenden vierten Ecke E4 geht der Kopfteil 12f der Adapterwände 12e in einen Verbindungsschenkel 12g über. Die Verbindungsschenkel 12g schließen sich hierbei diagonal beziehungsweise schräg nach unten von der Anschlussseite der Adapterwände 12e weggerichtet verlaufend an den Kopfteil 12f der jeweiligen Adapterwand 12e an. Die Verbindungsschenkel 12g sind flach und länglich ausgebildet und gleichen somit hinsichtlich ihrem grundlegenden Aufbau im Wesentlichen dem Aufbau der Schenkel 3a, 4a des Obergurtes 3a beziehungsweise des Untergurtes 4a.

Durch den diagonalen Verlauf der Verbindungsschenkel 12g ist bei einem auf das entsprechende Ende des Kranträgers 2 aufgesetzten Adapter 12 die Verbindung mit dem gegenüber dem Obergurt 3 kürzer ausgebildeten Untergurtes 4 möglich. Hierbei sind die Abmessungen der Adapterwände 12e, insbesondere hinsichtlich deren Kopfteile 12f und deren Verbindungsschenkel 12g, in Abhängigkeit des Abstandes zwischen dem Obergurt 3 und dem Untergurt 4 so gewählt, dass die Verbindungsschenkel 12g den Untergurt 4 erreichen und hierbei außerhalb der Schenkel 4a an deren Außenseiten so anliegen, dass diese noch seitlich miteinander verbunden beziehungsweise verschweißt werden können. Anders als bei den Ober- und Untergurten 3, 4 in Figur 3 sind in Figur 4a die Schenkel 3a des Obergurts 3 also nicht jeweils vertikal fluchtend mit den Schenkeln 4a des Untergurts 4 ausgerichtet, sondern die Schenkel 3a sind in horizontaler Richtung weiter voneinander beabstandet als die Schenkel 4a. Somit können die am Untergurt 4 ankommende Verbindungsstrebe 12g und die letzte Strebe 5 einander auch innerhalb beziehungsweise außerhalb des jeweiligen Schenkels 4a kreuzen.

Es ist jedoch ebenso möglich, dass die Schenkel 3a, 4a zueinander wie in Figur 3 gezeigt angeordnet sind und die unteren Enden der Verbindungsschenkel 12g dementsprechend weit zwischen dessen Schenkeln 4a eintauchen, um mit diesen verbunden werden zu können. Dementsprechend sind die Adapterwände 12e so weit voneinander beabstandet angeordnet, dass sie im Bereich der Kopfteile 12f ebenso wie an den unteren freien Enden der Verbindungsschenkel 12g mit ihren Außenseiten an den Innenseiten der Schenkel 3a, 3b der Obergurtprofile 3d, 3e des Obergurtes 3 beziehungsweise des Untergurtes 4 flächig anliegen.

Es ist ebenso denkbar, dass bei ungleich voneinander beabstandeten Schenkeln 3a, 4a die Adapterplatten 12 mit ihren Kopfteilen 12f zwischen den Schenkeln 3a des Obergurtes 3, mit ihren Verbindungsschenkeln 12g jedoch außerhalb der Schenkel 4a des Untergurtes 4 an deren Außenseiten anliegen.

Damit der Adapter 12 beziehungsweise dessen entsprechend voneinander beabstandeten Adapterwände 12e, insbesondere deren Verbindungsschenkel 12g, eine ausreichende Steifigkeit und Stabilität erhalten, ist an den Unterseiten der Adapterwände 12e eine Abschlussplatte 12h vorgesehen. Die Abschlussplatte 12h erstreckt sich dabei ausgehend von der dritten Ecke E3 des Kopfteils 12e in Richtung der vierten Ecke E4 zunächst horizontal und folgt anschließend diagonal nach unten dem Verlauf der Verbindungsschenkel 12g bis sie an dem Untergurt 4 endet. Die auf diese Weise abgewinkelt ausgebildete Abschlussplatte 12h ist mit den Unterseiten der Adapterwände 12e verschweißt. Außerdem ist an einem von den Kopfteilen 12f abgewandten Ende der Anschlussplatte eine im Wesentlichen rechteckförmige Ausnehmung 12i vorgesehen.

Die Anpassung an die gewünschte Länge L eines Kranträgers 2 ist auch möglich, wenn abweichend von der Darstellung in Figur 4a - wie beispielsweise bei dem zweiten Kran 1b - jeder Kranträger 2 einen Obergurt 3 mit einem Flachprofil 3b umfasst. Bei einem einteilig als Flachprofil 3b ausgebildeten Obergurt 3 sind die Adapterwände 12e unterhalb der Kopfplatte 12b so weit zurück versetzt, dass der Adapter 12 nur noch mit seiner Kopfplatte 12b auf dem Obergurt 3 aufliegt. Die Adapterwände 12e liegen dann also nicht mehr seitlich an den Schenkeln 3a, 4a an.

Zur längenmäßigen Fertigstellung des Kranträgers 2 und Ausgleich dessen Fertigungstoleranzen wird der Adapter 12 auf ein Ende des Kranträgers 2 aufgeschoben, wobei dessen Kopfplatte 12b flächig auf den Oberseiten des Obergurtes 3 beziehungsweise der beiden Obergurtprofile 3d, 3e aufliegt. Die einzustellende Länge L und etwaig notwendige Verdrehungen um die vorbeschriebenen horizontalen und vertikalen Achsen wird durch Anschlussflächen 12c der an beiden Enden des Kranträgers 2 angeordneten Anschlussplatten 12a definiert, wobei die Anschlussflächen 12c einander entgegengesetzt von den Obergurten 3 weg zeigen. Die Länge L und Ausrichtung wird abschließend maßgenau eingestellt, indem der mit der Kopfplatte 12b auf dem Obergurt 3 aufliegende Adapter 12 entsprechend in der Längsrichtung LR verschoben und verdreht wird. Um die auf diese Weise eingestellte Länge L und Ausrichtung zu fixieren, werden dann die Adapter 12 mit dem Obergurt 3 und dem Untergurt 4 verschweißt.

Es ist jedoch ebenso möglich, zunächst einen Adapter 12 ohne Anschlussplatte 12a auf das Ende des Kranträgers aufzuschieben und die Länge L und Ausrichtung einzustellen. Hierbei wird das Maß der noch zu befestigenden Anschlussplatte 12a berücksichtigt. Die Anschlussplatte 12a wird dann abschließend angeschweißt, um die beiden gegenüberliegenden Anschlussplatten 12a zusätzlich miteinander auszurichten, da in den Anschlussplatten 12a bereits Bohrungen 12d vorgesehen sind, über die die Fahrwerke 7, 8 an den Adaptern 12 und somit an dem entsprechenden Kranträger 2 befestigt werden. Die Anschlussplatte 12a kann relativ zu der Kopfplatte 12b und den Adapterwänden 12e für das Ausrichten horizontal und vertikal verschoben werden und um die Längsrichtung LR des Kranträgers 2 verdreht werden. Hierfür liegt die Anschlussplatte 12a von der Seite her an der Kopfplatte 12b und den Adapterwänden 12e an, bevor diese nach dem Ausrichten angeschweißt werden. Bevorzugt weist ein Adapter 12 bereits eine befestigte Anschlussplatte 12a auf. Der gegenüberliegende Adapter 12 wird zweistufig ausgerichtet und angeschweißt - zunächst die Kopfplatte 12b mit den hiermit verbundenen Adapterwänden 12e und dann hieran erst die Anschlussplatte 12a.

Die Figur 4b zeigt eine in Längsrichtung LR des Kranträgers 2 gesehene Ansicht des auf ein Ende des Kranträgers 2 aufgeschobenen Adapters 12. Es ist erkennbar, dass die horizontal ausgerichtete Kopfplatte 12b des Adapters 12 auf dem Obergurt 3 beziehungsweise dessen Obergurtprofilen 3d, 3e aufliegt. Daran schließt sich die vertikal ausgerichtete Anschlussplatte 12a mit den Bohrungen 12d zur Befestigung eines der hier nicht dargestellten Fahrwerke 7, 8 an. Unterhalb der Anschlussplatte 12a ist die Abschlussplatte 12h angeordnet, an deren dem Untergurt 4 zugewandten Ende die Ausnehmung 12i vorgesehen ist. Durch die Ausnehmung 12i hindurch ist eine Strebe 5 zu erkennen, die mit ihren Strebenfüßen 5f zwischen den Schenkeln 4a des Flachprofils 4b des Untergurtes 4 eintaucht. An den außen liegenden Längsseiten der Strebenfüße 5f ist jeweils eine der Schweißnähte S angedeutet, über die die Strebe 5 an dem Untergurt 4 befestigt ist.

### Bezugszeichenliste

- 1a: erster Kran
- 1b: zweiter Kran
- 2: Kranträger
- 3: Obergurt
- 3a: Schenkel
- 3b: Flachprofil
- 3c: Lauffläche
- 3d: erstes Obergurtprofil
- 3e: zweites Obergurtprofil
- 4: Untergurt
- 4a: Schenkel
- 4b: Flachprofil
- 4c: Lauffläche
- 5: Strebe
- 5a: Hauptfläche
- 5b: Nebenfläche
- 5c: untere Ausnehmung
- 5d: obere Ausnehmung
- 5e: Aussparung
- 5f: Strebenfuß
- 5g: erstes Strebenende
- 5h: zweites Strebenende
- 6: Pfosten
- 6a: Hauptfläche
- 6b: Nebenfläche
- 6c: untere Ausnehmung
- 6d: obere Ausnehmung
- 6e: Aussparung
- 6f: Pfostenfuß
- 6g: erstes Pfostenende
- 6h: zweites Pfostenende
- 7: erstes Fahrwerk
- 7a: erster Elektromotor
- 8: zweites Fahrwerk
- 8a: zweiter Elektromotor
- 9: Krankatze
- 10: Kransteuerung
- 11: Hängesteuerschalter
- 12: Adapter
- 12a: Anschlussplatte
- 12b: Kopfplatte
- 12c: Anschlussfläche
- 12d: Bohrungen
- 12e: Adapterwand
- 12f: Kopfteil
- 12g: Verbindungsschenkel
- 12h: Abschlussplatte
- 12i: Ausnehmung
- α1: erster Anstellwinkel
- α2: zweiter Anstellwinkel
- B: Breite
- E1: erste Ecke
- E2: zweite Ecke
- E3: dritte Ecke
- E4: vierte Ecke
- F: Fahrtrichtung
- L: Länge
- LA: Längsachse
- LR: Längsrichtung
- OK: oberer Knotenpunkt
- S: Schweißnaht
- UK: unterer Knotenpunkt

## Patentansprüche

1. Kran (1 a, 1 b), insbesondere Brückenkran oder Portalkran, mit mindestens einem sich horizontal erstreckenden und als Fachwerkträger mit einem Obergurt (3) und einem Untergurt (4) ausgebildeten Kranträger (2), an dem eine Krankatze (9) mit einem Hebezeug verfahrbar ist, wobei der Kranträger (2) an mindestens einem der beiden gegenüberliegenden Enden einen Adapter (12) umfasst, an dem ein Fahrwerk (7, 8) befestigt ist, wobei der Adapter (12) an dem Obergurt (3) und dem Untergurt (4) relativ zu dem Obergurt (3) und dem Untergurt (4) in einer gewünschten Position ausgerichtet ist und anschließend der Adapter (12) an dem Obergurt (3) und dem Untergurt (4) angeschweißt ist, **dadurch gekennzeichnet, dass** der Adapter (12) eine Anschlussplatte (12a) zur Befestigung an dem Fahrwerk (7, 8), eine Kopfplatte (12b) zur Befestigung an dem Obergurt (3) und Adapterwände (12e) zur Befestigung an dem Untergurt (4) umfasst, dass an der Kopfplatte (12b) die Adapterwände (12e) befestigt sind, die Kopfplatte (12b) horizontal auf dem Obergurt (3) des Kranträgers (2) aufliegt und mit dem Obergurt (3) in der gewünschten Position verschweißt ist und die Adapterwände (12e) im Bereich des Untergurts (4) enden und mit dem Untergurt (4) in der gewünschten Position verschweißt sind.

2. Kran (1 a, 1 b) nach Anspruch 1, **dadurch gekennzeichnet, dass** der Adapter (12) zumindest in einer Längsrichtung (LR) des Kranträgers (2) relativ zu dem Obergurt (3) und dem Untergurt (4) ausrichtbar ist.

3. Kran (1 a, 1 b) nach Anspruch 1 oder 2, **dadurch gekennzeichnet, dass** der Kranträger (2) an jedem der beiden gegenüberliegenden Enden einen Adapter (12) umfasst.

4. Kran (1 a, 1 b) nach einem der Ansprüche 1 bis 3, **dadurch gekennzeichnet, dass** an der Kopfplatte (12b) zwei parallel und voneinander beabstandet verlaufende Adapterwände (12e) angeordnet sind.

5. Kran (1 a, 1 b) nach einem der Ansprüche 1 bis 4, **dadurch gekennzeichnet, dass** an der Kopfplatte (12b) und den Adapterwänden (12e) die Anschlussplatte (12a) anliegt und in der gewünschten Position angeschweißt ist.

6. Kran (1 a, 1 b) nach einem der Ansprüche 1 bis 5, **dadurch gekennzeichnet, dass** über in der Anschlussplatte (12a) vorgesehene Bohrungen (12d) ein Fahrwerk (7, 8) an jedem Adapter (12) befestigbar ist.

7. Verfahren zur Montage eines sich horizontal mit einer Länge (L) erstreckenden und als Fachwerkträger mit einem Obergurt (3) und einem Untergurt (4) ausgebildeten Kranträgers (2) für einen Kran (1 a, 1 b), insbesondere Brückenkran oder Portalkran, an dem eine Krankatze (9) mit einem Hebezeug verfahrbar ist, bei dem in einem Montageschritt die Fachwerkkonstruktion des Kranträgers (2) hergestellt wird, wobei in einem weiteren Montageschritt an mindestens einem der beiden gegenüberliegenden Enden des Kranträgers (2) ein Adapter (12) zur Befestigung eines Fahrwerks (7, 8) angeordnet wird, der relativ zu dem Obergurt (3) und dem Untergurt (4) ausgerichtet wird und dann der Adapter (12) in einer gewünschten Position an dem Obergurt (3) und dem Untergurt (4) angeschweißt wird, **dadurch gekennzeichnet, dass** der Adapter (12) zumindest in einer Längsrichtung (LR) des Kranträgers (2) relativ zu dem Obergurt (3) und dem Untergurt (4) ausgerichtet wird, dass der an einer Kopfplatte (12b) befestigte Adapterwände (12e) umfassende Adapter (12) mit seiner Kopfplatte (12b) horizontal auf dem Obergurt (3) des Kranträgers (2) aufliegend mit dem Obergurt (3) in der gewünschten Position ausgerichtet und angeschweißt wird und die im Bereich des Untergurts (4) endenden Adapterwände (12e) mit dem Untergurt (4) in der gewünschten Position ausgerichtet und angeschweißt werden.

8. Verfahren nach Anspruch 7, **dadurch gekennzeichnet, dass** an der Kopfplatte (12b) und den Adapterwänden (12e) die Anschlussplatte (12a) in der gewünschten Position ausgerichtet und angeschweißt wird.

## Claims

1. Crane (1 a, 1 b), in particular a bridge crane or gantry crane, having at least one horizontally extending transverse girder (2) in the form of a truss having a top flange (3) and a bottom flange (4), on which transverse girder (2) a trolley (9) having a hoist is displaceable, the transverse girder (2) comprising, at at least one of its two opposite ends, an adapter (12) to which a running gear unit (7, 8) is fastened, the adapter (12) being positioned against the top flange (3) and bottom flange (4) in a desired position relative to the top flange (3) and bottom flange (4) and the adapter (12) then being welded to the top flange (3) and bottom flange (4), **characterised in that** the adapter (12) comprises a connecting plate (12a) for fastening to the running gear unit (7, 8), a top plate (12b) for fastening to the top flange (3), and adapter walls (12e) for fastening to the bottom flange (4), and **in that** the adapter walls (12e) are fastened to the top plate (12b), the top plate (12b) rests horizontally on the top flange (3) of the transverse girder (2) and is welded to the top flange (3) in the desired position, and the adapter walls (12e) terminate in the region of the bottom flange (4) and are welded to the bottom flange (4) in the desired position.

2. Crane (1a, 1b) according to claim 1, **characterised in that** the adapter (12) can be positioned relative to the top flange (3) and bottom flange (4) at least in a longitudinal direction (LR) of the transverse girder (2).

3. Crane (1 a, 1 b) according to claim 1 or 2, **characterised in that** the transverse girder (2) comprises an adapter (12) at each of its two opposite ends.

4. Crane (1a, 1b) according to one of claims 1 to 3, **characterised in that** two adapter walls (12e) which extend in parallel and at a spacing from one another are arranged against the top plate (12b).

5. Crane (1 a, 1 b) according to one of claims 1 to 4, **characterised in that** the connecting plate (12a) rests against the top plate (12b) and the adapter walls (12e) and is welded thereto in the desired position.

6. Crane (1a, 1b) according to one of claims 1 to 5, **characterised in that** a running gear unit (7, 8) can be fastened to each adapter (12) by means of holes (12d) provided in the connecting plate (12a).

7. Method of assembling a transverse girder (2) for a crane (1a, 1 b), in particular a bridge crane or gantry crane, on which transverse girder (2) a trolley (9) having a hoist is displaceable and which transverse girder (2) extends horizontally for a length (L) and is in the form of a truss having a top flange (3) and a bottom flange (4), in which method, in one step of assembly the truss structure of the transverse girder (2) is produced, there being arranged at at least one of the two opposite ends of the transverse girder (2), in a further step of assembly, an adapter (12) for fastening on a running gear unit (7, 8), which adapter (12) is positioned relative to the top flange (3) and bottom flange (4) and the adapter (12) is then welded to the top flange (3) and bottom flange (4) in a desired position, **characterised in that** the adapter (12) is positioned relative to the top flange (3) and bottom flange (4) at least in a longitudinal direction (LR) of the transverse girder (2), and **in that** the adapter (12), which comprises adapter walls (12e) fastened to a top plate (12b), is positioned in the desired position in relation to the top flange (3) of the transverse girder (2), and is welded thereto, by its top plate (12b), which rests horizontally on the top flange (3), and the adapter walls (12e), which terminate in the region of the bottom flange (4), are positioned in relation to and welded to the bottom flange (4) in the desired position.

8. Method according to claim 7, **characterised in that** the connecting plate (12a) is positioned against and welded to the top plate (12b) and the adapter walls (12e) in the desired position.

## Revendications

1. Grue (1a, 1 b), en particulier pont roulant ou grue à portique, comprenant au moins une poutre de grue (2) qui s'étend horizontalement et qui se présente sous la forme d'une poutre en treillis qui est pourvue d'une membrure supérieure (3) et d'une membrure inférieure (4) et sur lequel peut se déplacer un chariot (9) pourvu d'un engin de levage, la poutre de grue (2) comportant à l'une au moins des deux extrémités opposées un adaptateur (12) auquel est fixé un mécanisme de roulement (7, 8), l'adaptateur (12) sur la membrure supérieure (3) et la membrure inférieure (4) étant orienté dans une position désirée par rapport à la membrure supérieure (3) et la membrure inférieure (4), puis l'adaptateur (12) étant soudé à la membrure supérieure (3) et à la membrure inférieure (4), **caractérisée en ce que** l'adaptateur (12) comporte une plaque de raccordement (12a) destinée à être fixée au mécanisme de roulement (7, 8), une plaque supérieure (12b) destinée à être fixée à la membrure supérieure (3) et des parois d'adaptateur (12e) destinées à être fixées à la membrure inférieure (4), **en ce que** les parois d'adaptateur (12e) sont montées sur la plaque supérieure (12b), la plaque supérieure (12b) repose horizontalement sur la membrure supérieure (3) de la poutre de grue (2) et est soudée à la membre supérieure (3) dans la position souhaitée et les parois d'adaptateur (12e) se terminent dans la région de la membrure inférieure (4) et sont soudées à la membrure inférieure (4) dans la position souhaitée.

2. Grue (1a, 1 b) selon la revendication 1, **caractérisée en ce que** l'adaptateur (12) est orientable au moins dans une direction longitudinale (LR) de la poutre de grue (2) par rapport à la membrure supérieure (3) et à la membrure inférieure (4).

3. Grue (1a, 1b) selon la revendication 1 ou 2, **caractérisée en ce que** la poutre de grue (2) comporte un adaptateur (12) à chacune des deux extrémités opposées.

4. Grue (1a, 1b) selon l'une des revendications 1 à 3, **caractérisée en ce que** deux parois d'adaptateur (12e), s'étendant en parallèle à distance l'une de l'autre, sont disposées sur la plaque supérieure (12b).

5. Grue (1a, 1 b) selon l'une des revendications 1 à 4, **caractérisée en ce que** la plaque de raccordement (12a) est en appui sur la plaque supérieure (12b) et les parois d'adaptateur (12e) et est soudée à la position désirée.

6. Grue (1a, 1b) selon l'une des revendications 1 à 5, **caractérisée en ce qu'**un mécanisme de roulement (7, 8} peut être fixé à chaque adaptateur (12) par le biais de perçages (12d) ménagés dans la plaque de raccordement (12a).

7. Procédé de montage d'une poutre de grue (2) qui s'étend horizontalement sur une longueur (L) et qui se présente sous la forme d'une poutre en treillis qui est pourvue d'une membrure supérieure (3) et d'une membrure inférieure (4), la poutre de grue étant destinée à une grue (1 a, 1 b), en particulier un pont roulant ou une grue à portique, sur lequel peut se déplacer un chariot (9) pourvu d'un engin de levage, procédé dans lequel la structure en treillis de la poutre de grue (2) est préparée dans une étape de montage, à l'une au moins des deux extrémités opposées de la poutre de grue (2) étant fixé, dans une autre étape de montage, un adaptateur (12) qui est destiné à être fixé à un mécanisme de roulement (7, 8) et qui est orienté par rapport à la membrure supérieure (3) et à la membrure inférieure (4) puis l'adaptateur (12) étant soudé dans une position souhaitée à la membrure supérieure (3) et à la membrure inférieure (4), **caractérisé en ce que** l'adaptateur (12) est orienté au moins dans une direction longitudinale (LR) de la poutre de grue (2) par rapport à la membrure supérieure (3) et à la membrure inférieure (4), **en ce que** l'adaptateur (12), qui comporte des parois d'adaptateur (12e) fixées à une plaque supérieure (12b) et la plaque supérieure (12b) est en appui horizontalement sur la membrure supérieure (3) de la poutre de grue (2), est orienté dans la position souhaitée et soudée à la membrure supérieure (3) et les parois d'adaptateur (12e), qui se terminent dans la région de la membrure inférieure (4), sont orientées dans la position souhaitée et soudées à la membrure inférieure (4).

8. Procédé selon la revendication 7, **caractérisé en ce que** la plaque de raccordement (12a) est orientée dans la position souhaitée et soudée à la plaque supérieure (12b) et aux parois d'adaptateur (12e).
